(19) Europäisches Patentamt
European Patent Office
Office européen des brevets

(11) **EP 4 212 847 B1**

(12) **EUROPÄISCHE PATENTSCHRIFT**

(45) Veröffentlichungstag und Bekanntmachung des Hinweises auf die Patenterteilung:
**28.01.2026  Patentblatt 2026/05**

(21) Anmeldenummer: **22211850.7**

(22) Anmeldetag: **07.12.2022**

(51) Internationale Patentklassifikation (IPC):
**G01N 3/42** *(2006.01)*       **G01N 3/40** *(2006.01)*

(52) Gemeinsame Patentklassifikation (CPC):
**G01N 3/42; G01N 3/40;** G01N 2203/0078;
G01N 2203/0252

(54) **MESSSYSTEM UND VERFAHREN ZUR HÄRTEMESSUNG**

MEASURING SYSTEM AND METHOD FOR MEASURING HARDNESS

SYSTÈME DE MESURE ET PROCÉDÉ DE MESURE DE DURETÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **17.01.2022  DE 102022200458**

(43) Veröffentlichungstag der Anmeldung:
**19.07.2023  Patentblatt 2023/29**

(73) Patentinhaber: **Friedrich-Alexander-Universität Erlangen-Nürnberg,
in Vertretung des Freistaates Bayern
91058 Erlangen (DE)**

(72) Erfinder:
• **Hausotte, Tino
  91052 Erlangen (DE)**
• **Metzner, Sebastian
  90443 Nürnberg (DE)**
• **Schinn, Julien
  91056 Erlangen (DE)**
• **Merklein, Marion
  90491 Nürnberg (DE)**

(74) Vertreter: **Rau, Schneck & Hübner
Patentanwälte Rechtsanwälte PartGmbB
Königstraße 2
90402 Nürnberg (DE)**

(56) Entgegenhaltungen:
**JP-A- 2004 012 178**

• **CUTTINOA J.F. ET AL: "Three-dimensional metrology frame for precision applications", PRECISION ENGINEERING, vol. 23, no. 2, 1 April 1999 (1999-04-01), AMSTERDAM, NL, pages 103 - 112, XP093012069, ISSN: 0141-6359, DOI: 10.1016/S0141-6359(98)00031-2**

**Beschreibung**

Die Erfindung betrifft ein Messsystem und ein Verfahren zur primären und instrumentierten Härtemessung eines Gegenstands. Die Messung der Härte als Charakterisierungsgröße von Materialien wird verwendet, um den Widerstand eines Körpers zu bestimmen, den er einem anderen härteren Prüfkörper entgegensetzt.

JP 3 899 437 B2 offenbart ein Härtemessgerät mit Nanoindenter. Cuttino, J. F., et al.: Three-dimensional metrology frame for precision applications, in: Precision Engineering, Vol. 23, 1999, S. 103-112 offenbart einen dreidimensionalen Messrahmen. Manske, E. et al.: Recent developments and challenges of nanopositioning and nanomeasuring technology, in: Measurement Science and Technology, Vol. 23, 2012, No. 7, S. 1-10 offenbart Entwicklungen und Herausforderungen in der Nanomesstechnik. DE 199 04 448 A1 offenbart ein Verfahren zur zerstörungsfreien Ermittlung mechanischer Eigenschaften von Objektbereichen. EP 3 591 352 A1 offenbart eine Kibble-Waage.

Verfahren zur Härtemessung sind aus dem Stand der Technik bekannt. In der Richtlinie VDI/VDE 2616 Blatt 1:2012-08 werden Möglichkeiten genannt, einen Kennwert für die Härte eines Werkstoffes zu bestimmen. Eine Vergleichbarkeit zwischen den einzelnen Härtewerten aus unterschiedlichen Verfahren ist aufgrund der teils sehr unterschiedlichen Messprinzipien und Messverfahren nur schwer möglich.

Primärmessverfahren stehen immer am oberen Ende der metrologischen Rückführungskette für eine Messgröße. Grundlage dieser Kette für die Härtemessung sind die primären Härtenormalmesseinrichtungen der nationalen Metrologieinstitute (NMI, für Deutschland: Physikalisch-Technische Bundesanstalt (PTB)) sowie die Härte-Bezugsnormalmesseinrichtungen von Eichbehörden und Kalibrierlaboratorien.

Die Rückführung eines Härtemessgeräts kann direkt über die Rückführung der integrierten Messsysteme des Härtemessgeräts und/oder indirekt über Härtevergleichsplatten erfolgen. Bei der direkten Rückführung der Härtemessung wird beispielsweise für die Rockwell-Härtemessung gemäß DIN EN ISO 6508-2:2015-06 die Kalibrierung und Überprüfung der Prüfkraft mittels Kraftmessgeräten mit relativen Unsicherheiten < 0,05 % oder die Nutzung von kalibrierten Massestücken vorgeschlagen. Für die Kalibrierung und Überprüfung eines Eindringtiefen-Messsystems wird die Verwendung von kalibrierten Parallelendmaßen mit Unsicherheiten von < 0,3 $\mu$m vorgegeben.

Für die indirekte Rückführung werden von den nationalen Metrologieinstituten primäre Härtevergleichsplatten für Kalibrierlaboratorien kalibriert. Die Unsicherheit dieser Kalibrierungen wird wesentlich durch die Unsicherheit der direkten Kalibrierung der Messsysteme der primären HärteNormalmesseinrichtungen sowie die internationalen Maßvergleiche definiert. Die Kalibrierlaboratorien können durch die primären Härtevergleichsplatten ihre Härte-Bezugsnormalmesseinrichtungen rückführen sowie Härtevergleichsplatten für Anwender kalibrieren und zur Verfügung stellen. Diese Härtevergleichsplatten dienen wiederum beim Anwender zur Rückführung deren Härtemessgeräte. Aufgrund der hohen Messpräzision und der meist zusätzlichen direkten Rückführungen der integrierten Messsysteme werden bei der Härtemessung mit den Bezugsnormalmesseinrichtungen und Härtemessgeräten meist bessere Gerätemessunsicherheiten und bessere Messpräzisionen im Vergleich zur Kalibrierunsicherheit der primären Härtevergleichsplatten erzielt. Die Wiederhol- und Vergleichspräzision der Härteprüfmaschinen ist oft auch wesentlich besser als die Unsicherheiten der indirekten Rückführung über Härtevergleichsplatten. Diese Härtevergleichsplatten weisen eine relative Unsicherheit des Härteprüfwertes von bis zu 0,9 % auf. Da gefordert wird, dass die Messunsicherheit bei einer Härtemessung den Betrag zur Messunsicherheit aus der Kalibrierunsicherheit des zertifizierten Wertes des zertifizierten Referenzmaterials einschließen muss, wird die Unsicherheit der Härtemessung derzeit durch die schlechtere indirekte Rückführung definiert.

EP 3 591 352 A1 offenbart für die kürzere Rückführung der industriellen Wägungen Planck-Waagen, welche das Kibble-Waagenprinzip für eine primäre Messung der Masse nutzen. In DE 10 2015 104 696 B3 wird eine elektrodynamische Levitationseinrichtung zur simultanen Messung von Kräften und Drehmomenten beschrieben. Die dort dargestellten Vorrichtungen zielen entweder auf den Einsatz des Systems als Waage oder zur Kalibrierung von mehrachsigen Kraft- und Drehmomentmesseinrichtungen ab. Aufbauend darauf beschreibt DE 10 2016 010 668 B3 die Erweiterung dieser elektrodynamischen Levitationseinrichtung um das Kibble-Waagenprinzip.

In DE 10 2015 008 326 B4 wird die Aufbringung der Messkraft für die Härtemessung über elektromagnetische Spulen beschrieben. Die Rückführung der Kraft-Spannungs-Kennlinie erfolgt hierbei jedoch im Vergleich zu der vorliegenden Erfindung über ein konventionelles Wägesystem. Die Lorentzkraft wird dabei über eine Haltevorrichtung auf den Indenter übertragen, der mit einem Parallellenkersystem wie in den elektromagnetischen Kraftkompensations(EMK)-Waagen geführt wird. Die Auslenkungsmessung erfolgt inkrementell mit einem Gittermaßstab, wobei dieser gemäß des Abbe-Prinzips fluchtend auf die zu messende Strecke ausgerichtet ist.

Der Erfindung liegt die Aufgabe zugrunde, die Härtemessung eines Gegenstands zu verbessern, wobei insbesondere eine Härtemessung mit indirekter Kalibrierung und Rückführung mittels Härtevergleichsplatten und eine primäre, instrumentierte Härtemessung mit einer direkten Rückführung insbesondere über eine primäre Kraftmessung und/oder eine primäre Wegmessung ermöglicht sind.

Die Aufgabe wird gelöst durch ein Messsystem mit den Merkmalen des Anspruchs 1 sowie durch ein Verfahren mit den Merkmalen des Anspruchs 12.

Der Kern der Erfindung besteht darin, dass für das Verfahren der Härtemessung die Lorentzkraft $F_L$ genutzt wird.

Durch mindestens einen Aktor zur Krafterzeugung und insbesondere zur impliziten Kraftmessung sowie durch mindestens einen Aktor zur Bewegungserzeugung wird eine Rückführung der Kraftmessung, insbesondere durch das Kibble-Waagenprinzip, ermöglicht.

Das Verfahren nutzt regelmäßig oder nach Lageänderung einen Wägemodus (engl. force mode, FM) für die Bestimmung der Gewichtskraft $F_G$ und bei einer gegenüber der Vertikalen geneigt angeordneten Orientierung einer Hangabtriebskraft $F_H$ des Läufers, indem mit einer die Gewichtskraft- oder Hangabtriebskraft-kompensierenden Lorentzkraft $F_{L,FM}$ auf eine feste Position geregelt wird. Die Größe der Lorentzkraft $F_{L,FM}$ kann gemäß der Gleichung (1) für das Kräftegleichgewicht unter Kenntnis des Kreuzprodukts aus der Leiterlänge $l$ und magnetischen Flussdichte $B$ bzw. des Aktorparameters $l \times B$ aus dem kompensierenden Spulenstrom $I_{FM}$ ermittelt werden.

$$\vec{F}_{L,FM} = \vec{F}_G = m \cdot \vec{g} = I_{FM} \cdot (\vec{l} \times \vec{B}) \qquad (1)$$

Um das Kreuzprodukt aus der Leiterlänge $l$ und magnetischen Flussdichte $B$ bzw. des Aktorparameters $l \times B$ aus der Gleichung (1) zu bestimmen, wird zusätzlich in einem Geschwindigkeitsmodus (engl. velocity mode, VM) bei einer Bewegung mit bekannter Geschwindigkeit $v_{VM}$ die in die gleiche Spule induzierte Spannung $U_{VM}$ gemessen, welche gemäß der Gleichung (2) für die Bewegungsinduktion vom gleichen Kreuzprodukt aus der Leiterlänge $l$ und magnetischen Flussdichte $B$ sowie der Geschwindigkeit $v_{VM}$ abhängig ist.

$$U_{VM} = (\vec{l} \times \vec{B}) \cdot \vec{v}_{VM} \qquad (2)$$

Für die Härtemessung wird der Eindringkörper nachfolgend im Modus der Härtemessung (engl. hardness measurement, HM) linear in Aktorrichtung bis zur Aufbringung der maximalen Messkraft bewegt.

Das Messsystem umfasst mindestens einen Aktor zur Erzeugung der Lorentzkraft für den Wägemodus und die Härtemessung sowie mindestens einen Aktor zur Erzeugung der Bewegung im Geschwindigkeitsmodus.

Die Ausführung der Aktoren kann als Tauchspulenaktor oder als elektromagnetischer Linearmotor erfolgen.

Die Aktoren werden im Geschwindigkeitsmodus entweder zur Erzeugung der notwendigen linearen Bewegungstrajektorie verwendet oder durch die Messung der induzierten Spannung $U_{VM}$ und der Geschwindigkeit $v_{VM}$ der Spule relativ zum Magnetfeld kalibriert. Die Aktoren können ihre Funktion wechseln, um von allen Aktoren die Aktorparameter $l \times B$ zu ermitteln.

Die Spule des mindestens einen Aktors für die Realisierung der Kompensationskraft im Wägemodus und der Messkraft bei der Härtemessung und die Spule des mindestens einen Aktors für die Realisierung der Bewegung im Geschwindigkeitsmodus sind Bestandteile eines Läufers, der ferner einen Eindringkörper, einen sogenannten Indenter, aufweist. Der Indenter dient zum Eindringen in den Gegenstand, insbesondere ein Messobjekt. Der Gegenstand ist entweder eine Härtevergleichsplatte oder ein zu untersuchender Gegenstand für die Bestimmung der Härte.

Die aus den Gleichungen (1) und (2) abgeleitete, bekannte Messgleichung (3) der Kibble-Waage

$$\vec{F}_{L,FM} \cdot \vec{v}_{VM} = \vec{F}_G \cdot \vec{v}_{VM} = m \cdot \vec{g} \cdot \vec{v}_{VM} = U_{VM} \cdot I_{FM} \qquad (3)$$

kann bei vertikaler Ausrichtung für die Bestimmung der Gewichtskraft $F_G$ bzw. die Gewichtskraft kompensierende Lorentzkraft $F_{L,FM}$ umgestellt und der kompensierende Spulenstrom $I_{FM}$ durch die über einen Reihenwiderstand R gemessene Spannung $U_{FM}$ mit dem ohmschen Gesetz ersetzt werden.

$$\vec{F}_{L,FM} = \vec{F}_G = m \cdot \vec{g} = \frac{U_{VM}}{\vec{v}_{VM}} \cdot I_{FM} = \frac{U_{VM}}{\vec{v}_{VM}} \cdot \frac{U_{FM}}{R} \qquad (4)$$

Für die Berechnung sind die gemessenen Werte der Geschwindigkeit $v_{VM}$ und Spannung $U_{VM}$ im Geschwindigkeitsmodus sowie gemessene Spannung $U_{FM}$ im Wägemodus erforderlich. Durch das beschriebene Verfahren ist für die beabsichtigte primäre, instrumentierte Härtemessung nur die Bestimmung der Gewichtskraft $F_G$ des Läufers bei vertikaler Ausrichtung gemäß Gleichung (4) oder bei Anwendung in einer gegenüber der Vertikalen mit einem Neigungswinkel $\alpha$ geneigten Ausrichtung der Messrichtung zum Vektor der Gewichtskraft $F_G$ die Hangabtriebskraft $F_{H,FM}$ im Wägemodus als Produkt $\cos(\alpha)$ und der Gewichtskraft $F_G$ des Läufers mit dem Indenter gemäß Gleichung (5) erforderlich.

$$\vec{F}_{L,FM} = \vec{F}_{H,FM} = \cos(\alpha) \cdot \vec{F}_G = \cos(\alpha) \cdot m \cdot \vec{g} = \frac{U_{VM}}{\vec{v}_{VM}} \cdot I_{FM} = \frac{U_{VM}}{\vec{v}_{VM}} \cdot \frac{U_{FM}}{R} \qquad (5)$$

Erfindungsgemäß wurde festgestellt, dass die lokale Fallbeschleunigung $g$ deshalb nicht bekannt sein muss und dass deren Bestimmung nicht wie bei den Waagen oder alternativen Härtemessverfahren mit Gewichtsstücken zur Kraftaufbringung einen Unsicherheitsbeitrag liefert. Vorteil der Erfindung ist demnach unter anderem, dass die Notwendigkeit der Bestimmung der lokalen Fallbeschleunigung $g$ am Messort entfällt. Wenn die Härtemessung mit der gleichen Ausrichtung bzw. Lage wie bei der Bestimmung Gewichtskraft $F_G$ bzw. Hangabtriebskraft $F_{H,FM}$ im Wägemodus durchgeführt wird, kann das Messsystem in beliebiger Richtung eingesetzt werden. Eine Nivellierung wie bei den Waagen entfällt und die Ausrichtung trägt nicht zur Unsicherheit der Prüf- bzw. Messkraft $F_{M,HM}$ im Modus der Härtemessung bei. Unter Voraussetzung der gleichen Lage des Messsystems bleibt die Hangabtriebskraft im Wägemodus und im Modus zur Härtemessung ($F_{H,FM} = F_{H,HM}$) konstant und kann für die Berechnung der Prüf- bzw. Messkraft $F_{M,HM}$ gemäß der Gleichung (6) verwendet werden.

$$\vec{F}_{\mathrm{M,HM}} = \vec{F}_{\mathrm{H,HM}} - \vec{F}_{\mathrm{L,HM}} = \frac{U_{\mathrm{VM}}}{\vec{v}_{\mathrm{VM}}} \cdot (I_{\mathrm{FM}} - I_{\mathrm{HM}}) = \frac{U_{\mathrm{VM}}}{\vec{v}_{\mathrm{VM}}} \cdot \frac{U_{\mathrm{FM}} - U_{\mathrm{HM}}}{R} \qquad (6)$$

Für die vertikale Anordnung der Vorrichtung muss die Gewichtskraft $F_G$ des Läufers durch den Aktor zur Erzeugung einer nach oben gerichteten Lorentzkraft $F_{L,FM}$ mindestens getragen werden können, um den Läufer in einen levitierenden Zustand zu bringen und den Indenter von der Probe abzuheben. Bei der Härtemessung ergibt sich in der vertikalen Anordnung die Messkraft $F_{M,HM}$ aus der Differenz von Gewichtskraft $F_G$ und einer wählbaren Lorentzkraft $F_{L,HM}$. Die Messkraft kann zwischen Null und der Summe aus der Gewichtskraft $F_G$ und dem Betrag der maximal negativen Lorentzkraft $F_{L,HM}$ variieren. Um eine maximale Messkraft $F_{M,HM}$ zu erreichen, ist eine vertikale Ausrichtung der Bewegungsachse des Läufers zu bevorzugen.

Die Verwendung von Luftlagern zur Linearführung des Läufers erlaubt im Gegensatz zu den Parallelfederführungen der EMK-Waagen oder einer Anordnung gemäß DE 10 2015 008 326 B4 eine reibungsfreie, federkraftfreie, geradlinige und robuste Führung des Läufers mit dem Indenter.

Das Messsystem weist einen Metrologierahmen auf, der auf dem Stativ aufliegt und sich seitlich an diesem abstützt. Der Metrologierahmen ist insbesondere C-förmig ausgeführt und/oder insbesondere aus Werkstoffen hergestellt, die einen geringen thermischen Längenausdehnungskoeffizienten aufweisen.

Das Messsystem weist eine Wegmesseinheit auf, die zur Messung eines Weges des Läufers mit dem Indenter und/oder des Stativschlittens relativ zum Stativ und/oder relativ zum Gegenlager dient. Die Messung des zurückgelegten Weges des Läufers mit dem Indenter und die Positions- und Trajektorienregelung erfolgt mittels eines über die Laserlichtwellenlänge rückgeführten Laserinterferometers oder alternativ mit solchen direkt oder indirekt kalibrierten Wegmesssysteme.

Der Metrologierahmen und die Wegmesseinheit definieren einen getrennten Wegmesskreis. Erfindungsgemäß werden durch eine getrennte Ausführung von Wegmesskreis und Kraftmesskreis, welche nur am Gegenlager, dem Gegenstand und dem Indenter gemeinsam verlaufen, Abweichungen der Wegmessung aufgrund von messkraftbedingten Deformationen eines sonst gemeinsamen Wegmesskreises und Kraftmesskreises vermieden. Zusätzlich ermöglicht diese Trennung eine thermische Isolation des Metrologierahmens, um dessen Temperaturschwankungen und damit bedingte Längenschwankungen zu reduzieren.

Das Wegmesssystem erlaubt entweder die getrennte oder summierte Erfassung der Bewegung des Indenters verursacht durch die Lorentzkraft sowie der vertikalen Vorpositionierung des Läufers mit dem Indenter durch den Stativschlitten. Die Vorpositionierung ermöglicht die Messung unterschiedlich dicker Gegenstände trotz der eingeschränkt nutzbaren Stellbereiche der Aktoren, die nachfolgend auch Lorentzaktoren oder kurz als Aktoren bezeichnet werden.

Die Messachse des Wegmesssystems ist mit der Achse des Indenters zur Realisierung des Abbe-Prinzips und zur Vermeidung von Längenmessabweichungen erster Ordnung fluchtend angeordnet.

Zwei Deflektionsmesssysteme, jeweils bestehend aus einer Laserdiode und einem 2D-Positionssensor, ermöglichen mit ihren sich auf der Indenterachse kreuzenden Laserstrahlen eine visuelle, vertikale Vorpositionierung des Läufers zur Anpassung an unterschiedliche Dicken des Gegenstandes und nachfolgend mit den vier Signalen der beiden 2D-Positionssensoren eine Neigungsausrichtung der zu untersuchenden Gegenstandsoberfläche zur Indenterachse sowie eine zusätzliche feinere vertikale Vorpositionierung des Stativschlittens mit dem Läufer. Die Neigungsausrichtung kann mit zwei zusätzlichen, vertikal angeordneten Linearaktoren, welche mit dem Gegenlager in einem Dreieck angeordnet sind, erfolgen. Eine messbare und/oder justierbare Ausrichtung des Indenters zur Gegenstandsoberfläche ermöglicht eine Vergleichbarkeit zwischen verschiedenen Härtemessungen. Zusätzliche, horizontal angeordnete Linearaktoren ermöglichen eine laterale Positionierung des Gegenstandes und dadurch eine variable Position des Orts der Indention auf dem Gegenstand.

Das erfindungsgemäße Messsystem und das erfindungsgemäße Verfahren ermöglichen die primäre, instrumentierte Härtemessung mittels einer indirekten Messung ausschließlich mit auf physikalische Konstanten und SI-Basiseinheiten rückgeführten Weg- und Kraftmessung. Insbesondere durch eine primäre laserinterferometrische Wegmessung und eine primäre Kraftmessung nach dem Kibble-Waagenprinzip wird die direkte Rückführung verkürzt und führt zu sichereren Messergebnissen. Die aus dem Stand der Technik bekannte Verwendung von Härtevergleichsplatten sowie von kalibrierten Referenzkraftmessgeräten oder Massestücken zur direkten Kalibrierung und/oder Rückführung der Prüfkraft ist dadurch entbehrlich.

Der Lorentzaktor zur Krafterzeugung wird auch als Krafterzeugungs-Aktor bezeichnet. Der Lorentzaktor zur Bewegungserzeugung wird auch als Bewegungserzeugungs-Aktor bezeichnet. Der Krafterzeugungs-Aktor und der Bewegungserzeugungs-Aktor sind insbesondere funktionsgleich und insbesondere baugleich ausgeführt. Es ist möglich, den Bewegungserzeugungs-Aktor als Krafterzeugungs-Aktor zu verwenden und umgekehrt.

Der Gegenstand, dessen Härte mittels des Geräts messbar ist, ist insbesondere Teil des Kraftmesskreises und des Wegmesskreises.

Der Kraftmesskreis und der Wegmesskreis sind getrennt voneinander ausgeführt, können sich aber in bestimmten Komponenten überschneiden, insbesondere bei dem Indenter, dem zu messenden Gegenstand und dem Gegenlager. Das bedeutet, dass der Indenter, das Gegenlager und der zu messende Gegenstand sowohl im Kraftmesskreis als auch im Wegmesskreis enthalten sind.

Insbesondere weist der Läufer eine, insbesondere mehrteilig und insbesondere zweiteilig ausgeführte, Trägerplatte auf, wobei insbesondere ein zentral angeordnetes, insbesondere thermisch ausdehnungsarmes Trägerplattenteil der Trägerplatte Teil des Wegmesskreises ist und wobei insbesondere ein das den zentral angeordneten Trägerplattenteil umgebendes zweites Trägerplattenteil Teil des Kraftmesskreises ist.

Ein Messsystem gemäß Anspruch 2 gewährleistet eine resultierende Kraftwirkung entlang der Indenterachse. Dies reduziert die Entstehung von Drehmomenten und Kippungen und verbessert die Messgenauigkeit. Insbesondere werden die Aktoren jeweils paarweise bezüglich der Längsachse des Indenters im gleichen Abstand zu dieser gegenüberliegend angeordnet. Die Aktoren sind insbesondere symmetrisch zur Längsachse des Indenters angeordnet.

Die Anzahl erforderlicher Anschlussdrähte für die Lorentzaktoren wird durch eine Reihenschaltung der jeweils gegenüberliegenden Aktoren reduziert, insbesondere halbiert. Dadurch können unerwünschte Störeinflüsse, insbesondere unerwünschte Federkräfte durch die Anschlussdrähte, reduziert werden.

Die vier Aktoren des Messsystems gemäß Anspruch 2 sind insbesondere flexibel nutzbar. Im Geschwindigkeitsmodus werden zwei Aktoren als Bewegungserzeugungs-Aktoren zur Kalibrierung der beiden anderen Krafterzeugungs-Aktoren genutzt. Zwei oder vier Aktoren werden in einem Wägemodus als Krafterzeugungs-Aktoren und bei der Härtemessung als Krafterzeugungs- und Bewegungserzeugungs-Aktoren genutzt.

Eine Ausgestaltung des Messsystems gemäß Anspruch 3 ermöglicht die Rückführung der Kraftmessung auf das Kibble-Waagenprinzip. Dadurch wird insbesondere die Unsicherheit der Rückführung reduziert und die Messgenauigkeit der Härtemessungen mit diesem Messsystem verbessert.

Eine Trägerplatte gemäß Anspruch 4 ermöglicht eine zielgerichtete, funktionelle Anpassung mit Blick auf die Härtemessung und Messgenauigkeit. Ein erstes Trägerplattenteil, das insbesondere der Wegmessung und dem Wegmesskreis zugeordnet ist, ist aus einem Werkstoff hergestellt, der einen geringen thermischen Längenausdehnungskoeffizienten aufweist, und trägt einen Messspiegel des Interferometers. Derartige Werkstoffe mit einem thermischen Längenausdehnungskoeffizienten von weniger als $\pm 2 \cdot 10^{-6}$ $K^{-1}$ unter Laborbedingungen sind beispielsweise Eisen-Nickel-Legierungen, insbesondere bestehend zu 64 % aus Eisen und zu 36 % aus Nickel. Eisen-Nickel-Legierungen werden unter den markengeschützten Handelsbezeichnungen Invar® oder Super-Invar® vertrieben. Werkstoffe mit geringeren thermischen Längenausdehnungskoeffizienten sind auch Quarzgläser, insbesondere bestehend aus $SiO_2$, glaskeramische Werkstoffe, die insbesondere unter den markengeschützten Handelsbezeichnungen ZERODUR® und CLEARCERAM® vertrieben werden, Titanium-Silikatglas unter der markengeschützten Bezeichnung ULE®, insbesondere bestehend aus SiO2-TiO2, und/oder eine ausdehnungsarme polykristalline Keramik unter dem markengeschützten Namen NEXCERA®, insbesondere bestehend aus $2MgO-2Al_2O_3-5SiO_2$.

Die Trägerplatte weist ferner ein zweites Trägerplattenteil auf, das in den Kraftmesskreis integriert ist und insbesondere aus einem Leichtbaumaterial hergestellt ist, das insbesondere eine hohe Steifigkeit und eine geringe Masse aufweist. Der für das zweite Trägerplattenteil verwendete Werkstoff ist insbesondere eine Aluminiumlegierung und/oder Kohlefaserverbundwerkstoff. Insbesondere ist das zweite Trägerplattenteil das erste Trägerplattenteil umgebend angeordnet. Insbesondere sind die beiden Trägerplattenteile konzentrisch zueinander und insbesondere konzentrisch zur Längsachse des Indenters angeordnet.

Dadurch, dass der Kraftmesskreis und der Wegmesskreis durch die beiden Trägerplattenteile voneinander getrennt sind, sind die Anforderungen an das zweite Trägerplattenteil, insbesondere dessen Dehn- und/oder Biegesteifigkeit, reduziert. Eventuelle prüfkraftbedingte Deformationen des zweiten Trägerplattenteils gehen nicht in die Wegmessung mit ein. Die Wegmessung ist von unerwünschten Deformationen des zweiten Trägerplattenteils entkoppelt und dadurch unverfälscht. Die Dichte des zweiten Trägerplattenteils ist insbesondere so festgelegt, dass die Gesamtmasse des Läufers von den Aktoren getragen wird. Eine Reduzierung des Wärmeeintrags wird durch eine minimale Bestromung der Aktoren erreicht.

Eine Ausgestaltung des Messsystems gemäß Anspruch 5 gewährleistet eine vorteilhafte Entkopplung von Kraftmesskreis und Wegmesskreis. Als kinematische Kelvin-Kopplung (engl. Kelvin kinematic coupling) wird eine kinematische Kopplung zwischen zwei Gegenständen verstanden, wobei die Gegenstände an drei Lagerstellen gegenseitig gelagert sind. Bei der kinematischen Kelvin-Kopplung weist eine Komponente der primären Lagerstelle, hier ein Auflager der kinematischen Kelvin-Kopplung, drei orthogonale Flächen oder drei Zylinderflächen auf. Die andere Komponente, also das Gegenlager, weist eine sphärische Außenkontur auf, die in der anderen Komponente mit definierter Position aufliegt aber rotieren kann. Die zwei weiteren Lagerstellen der kinematischen Kelvin-Kopplung an dem Stativ, stützen den Metrologierahmen insbesondere seitlich ab und sperren dessen Rotation. Die kinematische Kelvin-Kopplung gewährleistet eine zuverlässige, stabile und im Wesentlichen entkoppelte Abstützung und nicht überbestimmte Befestigung des Metrologierahmens am Stativ und damit eine definierte Verbindung zum Kraftmesskreis.

Dadurch, dass sich der Metrologierahmen an dem Stativ, insbesondere an der Vertikalsäule, seitlich abstützt, ist die Rotation des Metrologierahmens gesperrt.

Eine Ausgestaltung des Messsystems gemäß Anspruch 6 gewährleistet eine zuverlässige und genaue Wegmessung.

Als Wegmesseinheit dient ein Laserinterferometer, das insbesondere eine Laserstrahlquelle, einen Kollimator, einen Strahlteiler, zwei Messspiegel und eine Laserinterferometerauswerteeinheit aufweist. Insbesondere ist der erste Messspiegel am Läufer angeordnet, also beweglich mit dem Läufer und/oder dem Stativschlitten gegenüber dem Stativ ausgeführt. Der erste Messspiegel ist an der Trägerplatte des Läufers, insbesondere in dem zentralen Bereich des ersten Trägerplattenteils, angeordnet. Der zweite Messspiegel ist stationär ausgeführt und insbesondere am Metrologierahmen angeordnet. Die Messachse des Wegmesssystems ist mit der Achse des Indenters zur Realisierung des Abbe-Prinzips und zur Vermeidung von Längenmessabweichungen erster Ordnung fluchtend angeordnet. Insbesondere wird die Messung des zurückgelegten Weges des Läufers mit dem Indenter und die Positions- und Trajektorienregelung mittels des über die Laserlichtwellenlänge rückgeführten Laserinterferometers durchgeführt. Die Referenzposition zum Initialisieren des Interferometers wird für die Bewegung des Läufers und des Stativschlittens mit je mindestens einem optischen Positionssensor in Verbindung mit einer Blende mit zwei Öffnungen ermittelt. Dies ermöglicht eine korrekte Berücksichtigung der Totstrecke des Interferometers bei der Längenmesswertkorrektur sowie die getrennte Vorpositionierung des Indenters mit dem Stativschlitten, wobei die permanent erforderliche Lageregelung des Läufers auf das Signal des zugehörigen Positionssensors umgestellt ist.

Es ist grundsätzlich möglich, alternative Längenmesssysteme wie optische Linearencoder einzusetzen, insbesondere Wegmesssysteme, die mittels eines Laserinterferometers direkt oder indirekt kalibriert worden sind.

Die Ausgestaltung des Messsystems gemäß Anspruch 7 mit mindestens einem Linearluftlager ermöglicht eine reibungsfreie, insbesondere reibkraftfreie Linearführung des Läufers. Um unerwünschte Rotationen um die Längsachse eines rotationssymmetrischen Linearluftlagers zu vermeiden, ist ein rotationsgesperrtes Linearluftlager notwendig. Dazu werden insbesondere zwei Linearluftlager für die Linearführung des Läufers und insbesondere des Indenters verwendet. Die Luftlagerbuchsen der Linearführung sind insbesondere mit porösem Material als Luftauslass ausgeführt und insbesondere Bestandteil des Stativschlittens. Das Ausströmen der Druckluft und die Druckluftversorgungsschläuche haben somit keinen Einfluss auf die Messkraft.

Die Ausgestaltung des Messsystems gemäß Anspruch 8 ermöglicht die primäre Messung der Kraft und Rückführung der Kraftmessung nach dem Kibble-Waagenprinzip unter Nutzung der Lorentzkraft. Die Magnetanordnung kann fest und die Spule beweglich oder die Magnetanordnung beweglich und die Spule fest angeordnet sein.

Eine Ausgestaltung des Messsystems gemäß Anspruch 9 ermöglicht eine visuelle und automatisierte Bewertung des Abstands des Stativschlittens zum Gegenstand. Das mindestens eine Deflexionsmesssystem umfasst mindestens einen Lichtstrahl, insbesondere einen Laserstrahl, der durch einen Indentionspunkt verläuft. Wenn zwei Deflexionsmesssysteme vorhanden sind, kreuzen sich deren Lichtstrahlen, insbesondere deren Laserstrahlen in dem Indentionspunkt. Die auf den Oberflächen des Gegenstands sichtbaren reflektierenden Flächen der beiden Strahlen ermöglichen eine visuelle Beurteilung des Abstands des Läufers zur Probenoberfläche und überdecken sich im idealen Abstand und markieren gleichzeitig die Stelle der Härtemessung auf dem Gegenstand. Die Messsignale der 2D-Positionssensoren der Deflektionsmesssysteme ermöglichen die automatisierte Abstandsanpassung des Stativschlittens zu dem Gegenstand und die Ausrichtung der Neigung des Gegenstandes. Mit der Abstandsanpassung wird erreicht, dass der Eindringkörper immer bei nahezu gleicher Position des Läufers den Gegenstand erreicht und die Kraft-Weg-Kennlinien der Lorentzaktoren nur in einem kleineren Bereich genutzt werden und somit die Kraftmessgenauigkeit verbessert werden kann. Mit der Ausrichtung der Neigung des Gegenstandes wird die Gegenstandsoberfläche zu dem Eindringköper ausgerichtet, dass die Flächennormale der Gegenstandsoberfläche und die Indenter-Längsachse parallel verlaufen und somit sonst entstehende Abweichungen bei nicht senkrecht aufgebrachten Eindringköper reduziert werden.

Ein Messsystem gemäß Anspruch 10 vereinfacht die laterale Positionierung des Gegenstands bei der Härtemessung durch eine mögliche automatische Verschiebung des Gegenstands in lateraler Richtung parallel zur Ebene der Grundplatte des Stativs und ermöglicht insbesondere in Zusammenhang mit den Deflektionsmesssystemen aus Anspruch 9 eine automatisierte Ausrichtung der Neigung des Gegenstandes. Durch die laterale Positionierung kann die Härte in mehreren Zonen des Gegenstands gemessen werden.

Die Ausgestaltung des Messsystems gemäß Anspruch 11 ermöglicht eine automatisierte Durchführung der Härtemessung und/oder Messkraftkalibrierung im Wägemodus und Geschwindigkeitsmodus. Insbesondere ist eine Positionsregelung und/oder trajektoriengesteuerte Positionierung des Läufers mit dem Indenter und insbesondere in Echtzeit möglich. Eine derartige Steuerungs-/Regelungseinheit, die insbesondere mit der Wegmesseinheit nach Anspruch 6 und dem mindestens einen Deflektionsmesssystem nach Anspruch 9 einerseits sowie insbesondere mit den Aktoren nach Anspruch 3 und Stellaktor nach Anspruch 10 andererseits in, insbesondere bidirektionaler, Signalverbindung steht, ermöglicht eine automatisierte Durchführung der Härtemessung und/oder Messkraftkalibrierung.

Die Steuerungs-/Regelungseinheit dient zur Erfassung von Messsignalen, insbesondere der Wegmesseinheit, insbesondere des Laserinterferometers, von Referenzpositionssensoren, von Umweltsensoren, von Deflektionsmesssystemen sowie der Aktorströme und Aktorspannungen. Insbesondere weist die Steuerungs-/Regelungseinheit eine, insbesondere integriert ausgeführte, Auswerteeinheit auf, die zur Verarbeitung der Messsignale dient und insbesondere Stellsignale an die Aktoren ausgibt, insbesondere um Kraft, Position, Geschwindigkeit, Trajektorieren und Aktorströme vorzugeben.

Ein Verfahren gemäß Anspruch 12 weist im Wesentlichen die Vorteile des Messsystems gemäß Anspruch 1 auf, worauf hiermit verwiesen wird. Insbesondere wird durch eine Rückführung der Kraft- und Wegemessung eine primäre und instrumentierte Härtemessung ermöglicht sowie die Genauigkeit der Härtemessung des Gegenstands verbessert und die Messunsicherheit reduziert.

Sofern das Messsystem mit einer Neigung gegenüber der Vertikalen orientiert ist, wird anstelle der senkrecht nach unten orientierten Gewichtskraft eine entsprechende Hangabtriebskraft $F_{H,FM}$ ermittelt, die insbesondere abhängig von dem gegenüber der Vertikalen gemessenen Neigungswinkel ist. Das erfindungsgemäße Verfahren funktioniert unabhängig vom Neigungswinkel des Messsystems gegenüber der Vertikalen.

Optional kann bei dem Verfahren der Wert der Lorentzkraft $F_{L,FM}$ ermittelt werden, der den Gewichtskraftanteil des Läufers kompensiert. Dazu dient insbesondere die Gleichung (4), die aus der Messgleichung (3) der Kibble-Waage abgeleitet ist.

Ein Verfahren gemäß Anspruch 13 ermöglicht eine unaufwendige und automatische Durchführung der Härtemessung und/oder Messkraftkalibrierung und somit Rückführung der Härtemessung.

Ein Verfahren gemäß Anspruch 14 ermöglicht eine unaufwendige und automatische Durchführung der Härtemessung und/oder Messkraftkalibrierung sowie die Rückführung der Weg- und Geschwindigkeitsmessung.

Ein Verfahren gemäß Anspruch 15 ermöglichte eine unaufwendige und automatische Vorpositionierung des Stativschlittens und/oder parallele Ausrichtung Oberflächennormalen des Gegenstandes am Indentionspunkt auf die Indenter-Längsachse. Dadurch werden Messabweichungen bei der Härtemessung durch Nutzung des mindestens einen Aktors in wechselnden Kennlinienbereichen und/oder eine nicht senkrecht auf die Oberfläche oder einen nicht bekannten Winkel zur Oberfläche eingebrachte Kraft reduziert.

Weitere Merkmale, Vorteile und Einzelheiten der Erfindung ergeben sich aus der nachfolgenden Beschreibung eines Ausführungsbeispiels anhand der Zeichnung. Es zeigen:

Fig. 1    eine schematische Seitenansicht eines erfindungsgemäßen Messsystems,

Fig. 2    eine vergrößerte Einzelansicht eines Läufers des Messsystems in Fig. 1, und

Fig. 3    eine Schnittdarstellung gemäß Schnittlinie III-III in Fig. 2.

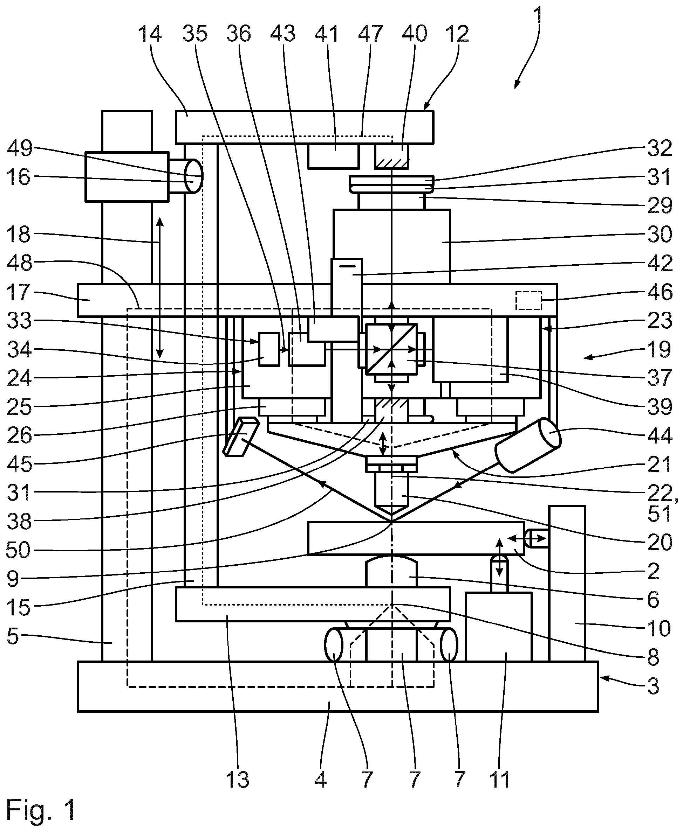

Ein in Fig. 1 bis 3 insgesamt mit 1 gekennzeichnetes Messsystem dient zur primäre und instrumentierten Härtemessung eines Gegenstands 2.

Das Messsystem 1 umfasst ein Stativ 3 mit einer Grundplatte 4 und einer an der Grundplatte 4 befestigten Vertikalsäule 5. Insbesondere ist das Stativ 3 höhenverstellbar und/oder nivellierbar, um einerseits eine Anpassung an unterschiedliche Gegenstandsdicken zu ermöglichen und andererseits eine horizontale Ausrichtung des Stativs 3, insbesondere der Grundplatte 4, zu vereinfachen. Die Vertikalsäule 5 ist senkrecht bezüglich der Grundplatte 4 orientiert. Wenn die Grundplatte 4, wie in Fig. 1 dargestellt, horizontal orientiert ist, ist die Vertikalsäule 5 vertikal orientiert. Sofern die Grundplatte 4 mit einem Neigungswinkel gegenüber der Horizontalen orientiert sein sollte, ist die Vertikalsäule 5 mit demselben Neigungswinkel gegenüber der Vertikalen orientiert.

Auf der Grundplatte 4 ist ein Gegenlager 6 angeordnet. Das Gegenlager 6 liegt auf der Grundplatte 4 mittels einer primären Auflage 7 einer kinematischen Kelvin-Kopplung in einer somit definierten Kugelmittelpunktposition auf, die Kugelmittelpunktposition bildet einen sogenannten Lagerpunkt 8. In dem Lagerpunkt 8 ist das Gegenlager 6 in den drei translatorischen Freiheitsgraden gesperrt. Die primäre Auflage 7 der kinematischen Kelvin-Kopplung besteht bevorzugt aus drei Zylinderstiften, deren Zylinderachsen in einer gemeinsamen, senkrecht zu einer Vertikalachse 51 orientierten Ebene angeordnet sind und die Zylinderachsen in einem Winkel von 120° zueinander liegen und zusätzlich ein Dreieck bilden. Das Gegenlager 6 berührt jeden der drei Zylinderstifte der primären Auflage 7 mit einer Punktberührung. Ein Gleiten an den drei Berührungspunkten und eine resultierende Rotation des Gegenlagers 6 wird nicht gesperrt und ermöglicht die seitliche Anlage eines Metrologierahmens 12 an den zwei weiteren Auflagern 16 der kinematischen Kelvin-Kopplung an der Vertikalsäule 5. Der Metrologierahmen 12 ist mit dem Gegenlager 6 starr verbunden. Auf dem Gegenlager 6 wird für die Härtemessung der Gegenstand 2 angeordnet. Gemäß dem gezeigten Ausführungsbeispiel ist das Gegenlager 6 teilweise kugelförmig ausgeführt und/oder weist zumindest eine weitere sphärisch geformte, konvexe Oberfläche auf, die als Kontaktfläche zum Auflegen des Gegenstands 2 dient. Zwischen dem Gegenstand 2 und dem Gegenlager 6 liegt eine Punktberührung vor. Reibungsverluste bei Relativbewegungen zwischen dem Gegenstand 2 und dem Gegenlager 6 sind dadurch minimiert. Die sphärisch geformte, konvexe Oberfläche des Gegenlagers 6 stellt sicher, dass bei einer Änderung der Neigung des Gegenstandes 2 weiterhin eine Punktberührung vorliegt. Durch zwei vertikal angeordnete Stellaktoren 11 und das Gegenlager 6 in einer Dreiecksanordnung ist eine nicht überbestimmte Auflage des Gegenstandes 2 mit einer definiert einstellbaren Neigung möglich. Der Mittelpunkt der sphärisch geformten, konvexen Oberfläche des Gegenlagers 6 liegt vorzugsweise auf einer Indenter-Längsachse 22, damit bei planparallelen Objekten als Gegenstand 2 die Punktberührung genau gegenüber des Indentionspunktes liegt und ein gerader, nicht versetzter Kraftverlauf im Kraftmesskreis 48 vorliegt. Das Gegenlager 6 kann auch eine anders gestaltete Oberfläche aufweisen, insbesondere kann das Gegenlager 6 zylinderförmig ausgeführt sein oder eine polygonförmige Außenkontur aufweisen.

Der Gegenstand 2 kann mittels eines oder mehrerer horizontal angeordneter Stellaktoren 10 positioniert und/oder mittels eines oder zweier vertikal angeordneter Stellaktoren 11 geneigt werden. Die Stellaktoren 10, 11 sind insbesondere Linearaktoren. Die Stellaktoren 10, 11 liegen unmittelbar an dem Gegenstand 2 an. Die Stellaktoren 10, 11 sind insbesondere als Piezo-Aktuatoren ausgeführt. Es ist auch möglich, dass mehrere Stellaktoren 10, 11 vorgesehen sind, die insbesondere in einer Richtung senkrecht zur Zeichenebene gemäß Fig. 1 hintereinander und/oder nebeneinander angeordnet sind. Vorteilhaft ist es, wenn zusätzlich zu den Stellaktoren 10 der Gegenstand 2 mit mindestens einem Linearführungselement geführt wird, das in Fig. 1 nicht separat dargestellt ist. Mit dem Linearführungselement oder einem zweiten nebeneinander angeordneten Stellaktoren 10 wird die Rotation des Gegenstandes 2 um die vertikale Achse verhindert oder einstellbar. Vorteilhaft ist es weiterhin, wenn die Lagerung des Gegenstandes 2 einen zusätzlichen Stellaktor 10 mit Wirkrichtung senkrecht zur Zeichenebene aufweist, der in Fig. 1 nicht separat dargestellt ist, um den Gegenstand 2 auch in dieser Richtung zu positionieren.

Das Messsystem 1 weist ferner den Metrologierahmen 12 auf, der in sich steif ausgeführt ist. Der Metrologierahmen 12 weist eine untere, insbesondere plattenförmig ausgeführte Basis 13 und eine parallel dazu orientierte, beabstandet zur Basis 13 angeordnete, insbesondere plattenförmig ausgeführte Halteplatte 14 auf. Die Basis 13 und die Halteplatte 14 sind mittels einer oder mehrerer Stützen 15 fest miteinander verbunden. Die Stütze 15 ist jeweils senkrecht zur Basis 13 und zur Halteplatte 14 orientiert. Die Stütze 15 ist insbesondere parallel zur Vertikalsäule 5 orientiert. Der Metrologierahmen 12 ist im Wesentlichen C-förmig ausgeführt und/oder aus Werkstoffen hergestellt, die einen geringen thermischen Längenausdehnungskoeffizienten aufweisen. Der Metrologierahmen 12 liegt an der Vertikalsäule 5 des Stativs mit den zwei weiteren Auflagern 16 der kinematischen Kelvin-Kopplung an, die insbesondere in einer Richtung senkrecht zur Zeichenebene gemäß Fig. 1 mit einem Abstand hintereinander und/oder nebeneinander sowie weit entfernt vom primären Auflager 7 fest und insbesondere unbeweglich angeordnet sind, wodurch die Rotation des Metrologierahmens 12 gesperrt wird. Die Anlagekraft wird durch den vom Gegenlager 6 zur Vertikalsäule 5 versetzten Schwerpunkt des Metrologierrahmens 12 erzeugt. Das sekundäre Auflager der zwei weiteren Auflager 16 der kinematischen Kelvin-Kopplung besteht bevorzugt aus zwei Zylinderstiften, wobei die Zylinderachsen in einer gemeinsamen, horizontalen Ebene und die Zylinderachsen vorzugsweise in einem Winkel von 90° zueinander liegen. Die Winkelhalbierende zwischen den zwei Zylinderachsen ist parallel zur Zeichenebene gemäß Fig. 1 ausgerichtet. Der Metrologierahmen 12 berührt mit einer seiner vorzugsweise zylinderförmigen Stützen 15 jeden der zwei Zylinderstifte der sekundären Auflage 16 mit einer Punktberührung. Ein Gleiten an den zwei Berührungspunkten wird nicht gesperrt und ermöglicht einen Ausgleich von unterschiedlichen Längenänderungen des Stativs 3 und des Metrologierahmens 12 aufgrund von einwirkenden Kräften und Momenten und/oder Temperaturänderungen. Das sekundäre Auflager 16 sperrt zusammen mit dem primären Auflager 7 zwei Rotationen. Die verbleibende Rotationsfreiheit um die Verbindungslinie des Lagerpunkts 49 des sekundären Auflagers 16 mit dem Lagerpunkt 8 des primären Auflagers 7 wird durch das zweite Auflager 16 (= tertiäres Auflager) gesperrt. Das tertiäre Auflager der zwei weiteren Auflager 16 der kinematischen Kelvin-Kopplung besteht bevorzugt aus einem Zylinderstift, wobei die Zylinderachse in einer horizontalen Ebene liegt und insbesondere in einer Richtung senkrecht zur Zeichenebene gemäß Fig. 1 verläuft. Der Metrologierahmen 12 berührt mit einer weiteren seiner vorzugsweise zylinderförmigen Stützen 15 den Zylinderstift der tertiären Auflage 16 mit einer Punktberührung. Ein Gleiten an dem Berührungspunkt wird nicht gesperrt und ermöglicht einen Ausgleich von unterschiedlichen Längen- und Breitenänderungen des Stativs 3 und des Metrologierahmens 12 aufgrund von einwirkenden Kräften und Momenten und/oder Temperaturänderungen.

Der Metrologierahmen 12 ist statisch ausgeführt. Die kinematische Kelvin-Kopplung, bestehend aus den Auflagern 7 und Auflagern 16 sowie dem Gegenlager 6 und den Stützen 15, garantiert einen seitlichen Abstand zwischen dem Stativ 3 und dem Metrologierahmen 12, insbesondere zwischen der Vertikalsäule 5 und der Stütze 15. Dieser seitliche Abstand bleibt während einer Härtemessung trotz Messkraft-bedingter und Temperatur-bedingter und variierender Deformationen und Ausdehnungen des Stativs 3 nahezu konstant. Die Trennung des Wegmesskreises 47 und des Kraftmesskreises 48 ermöglicht ferner eine teilweise thermische Isolation des Metrologierahmens 12, um dessen Temperaturschwankungen und damit bedingte Längenänderungen zu reduzieren.

Der Metrologierahmen 12 ist, insbesondere mit der Basis 13, an dem Gegenlager 6 starr verschraubt.

Das Gegenlager 6 weist hierfür eine horizontale, ringförmige Auflagefläche auf, an welcher die Basis 13 des Metrologierahmen 12 befestigt wird. Durch die horizontale, ringförmige Auflagefläche wird eine in Wegmessrichtung definierte Verbindung des Kraft- und Wegmesskreises an der Unterseite der Basis 13 des Metrologierahmen 12 erreicht. Der Metrologierahmen 12 ist dadurch eindeutig und lagestabil angeordnet.

An dem Stativ 3, insbesondere entlang der Vertikalsäule 5, ist ein Stativschlitten 17 verfahrbar, also höhenverstellbar, entlang einer Höhenrichtung 18 angeordnet. Der Stativschlitten 17 ist entlang der Höhenrichtung 18 zwischen der Basis 13 und der Halteplatte 14 des Metrologierahmen 12 angeordnet und insbesondere jeweils parallel zu der Basis 13 und der Halteplatte 14 orientiert. Die Höhenrichtung 18 ist parallel zur Längsachse der Vertikalsäule 5 orientiert. Die Höhenrichtung 18 ist senkrecht zur Ebene des Stativs 3 orientiert.

Der Stativschlitten 17 ist im Wesentlichen plattenförmig ausgeführt und trägt einen insgesamt mit 19 bezeichneten Läufer. Der Läufer 19 weist einen Eindringkörper auf, der auch als Indenter 20 bezeichnet wird und der zum Eindringen in den Gegenstand 2 dient. Der Indenter 20 ist an einer Trägerplatte 21, insbesondere deren Unterseite befestigt. Der Indenter 20 weist eine Indenter-Längsachse 22 auf, die insbesondere parallel zur Höhenrichtung 18 und insbesondere senkrecht zur Ebene des Stativs 3 orientiert ist.

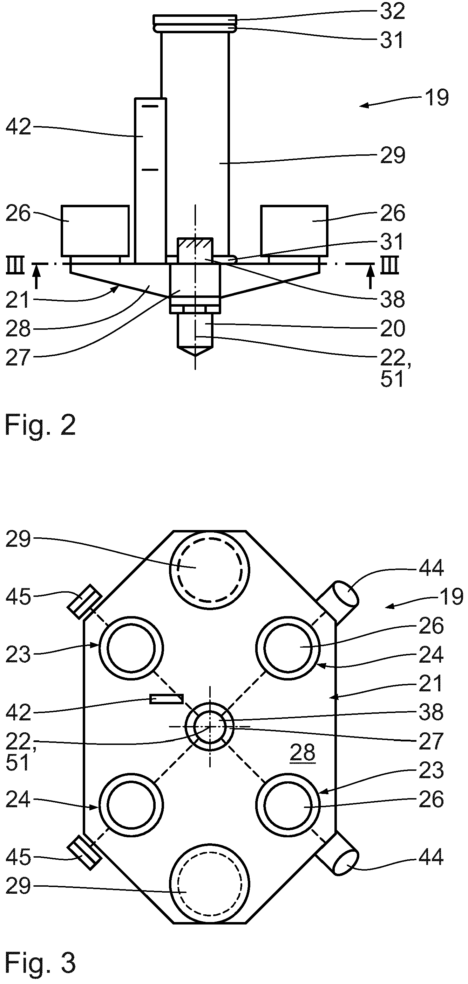

Der Indenter 20 ist über die Trägerplatte 21 sowie über an der Trägerplatte 21 befestigte Spulen 26 der Aktoren 23, 24 und zwei Präzisionswellen 29 der Linearluftlager 29, 30 mit dem Stativschlitten 17 gekoppelt, insbesondere daran befestigt. Gemäß dem gezeigten Ausführungsbeispiel sind zwei erste Lorentzaktoren vorgesehen, die als Aktor 23 für die Krafterzeugung im Wägemodus und für die Kraft- und Bewegungserzeugung bei der Härtemessung genutzt werden. Ferner sind zwei zweite Lorentzaktoren vorgesehen, die als Aktor 24 für die Bewegungserzeugung im Geschwindigkeitsmodus genutzt werden. Das Vertauschen der Lorentzaktoren 23 und 24 zur Nutzung jeweils als Aktoren für die Krafterzeugung und/oder die Bewegungserzeugung ist möglich und vorgesehen. Die ersten und zweiten Lorentzaktoren 23, 24 sind insbesondere identisch ausgeführt. Die ersten Lorentzaktoren 23 und die zweiten Lorentzaktoren 24 sind in einer Ebene senkrecht zur Indenter-Längsachse 22 jeweils diametral gegenüberliegend bezüglich der Indenter-Längsachse 22 zueinander angeordnet, wie dies insbesondere in Fig. 3 dargestellt ist. Die ersten und zweiten Lorentzaktoren 23, 24 weisen jeweils eine Magnetanordnung 25 auf, die insbesondere an dem Stativschlitten 17 befestigt ist. Die Lorentzaktoren 23, 24 weisen jeweils ferner eine gegenüber der Magnetanordnung 25 verlagerbare Spule 26 auf, die insbesondere an der Trägerplatte 21 befestigt ist.

Die Trägerplatte 21 ist zweiteilig ausgeführt und umfasst ein erstes Trägerplattenteil 27, das zentral, insbesondere koaxial zur Indenter-Längsachse 22 und kreisscheibenförmig bzw. zylindrisch, ausgeführt ist. Das erste Trägerplattenteil 27 ist aus einem Werkstoff mit geringem thermischen Längenausdehnungskoeffizient, insbesondere aus Invar® und/oder Quarzglas hergestellt, um die Längenänderung bei Temperaturänderung, insbesondere aus der Erwärmung der Spulen bei deren Bestromung, und die Auswirkungen auf den Wegmesskreis zu minimieren. Das erste Trägerplattenteil 27 ist von einem zweiten Trägerplattenteil 28 umgeben. Das zweite Trägerplattenteil 28 ist insbesondere ringscheibenförmig ausgeführt. Das zweite Trägerplattenteil 28 ist aus einem Leichtbauwerkstoff, insbesondere mit hoher Steifigkeit, insbesondere einer Aluminiumlegierung und/oder einem Kohlefaserverbundwerkstoff, hergestellt.

Der Indenter 20 und der erste Messspiegel 38 sind insbesondere an dem ersten Trägerplattenteil 27 befestigt. Die Lorentzaktoren 23, 24 sind insbesondere an dem zweiten Trägerplattenteil 28, insbesondere mit den Spulen 26 oder den Magnetanordnungen 25, befestigt. Die Lorentzaktoren 23, 24 sind insbesondere an einer dem Indenter 20 gegenüberliegenden Oberseite der Trägerplatte 21 befestigt. Die Lorentzaktoren 23, 24 und der Indenter 20 sind an den gegenüberliegenden Oberflächen der Trägerplatte 21 angeordnet.

Der Läufer 19 ist entlang der Höhenrichtung 18, insbesondere mittels zwei Präzisionswellen 29 durch zwei Luftlagerbuchsen 30, reibungsfrei linear geführt. Die Präzisionswellen 29 sind jeweils an dem Trägerplattenteil 28, insbesondere an der dem Indenter 20 gegenüberliegenden Oberseite angeordnet und daran befestigt. Die Präzisionswellen 29 sind zylinderförmig oder röhrenförmig ausgeführt. Zusätzlich ist an dem oberen Ende der Präzisionswelle 29, das der Trägerplatte 21 abgewandt ist, ein Präzisionswellenanschlag 32 angeordnet. An ihrem jeweiligen axialen Ende weisen die Präzisionswellen jeweils einen Präzisionswellendämpfungsring 31 auf. Die Präzisionswellendämpfungsringe 31 sind insbesondere als O-Ringe ausgeführt und dienen zusammen mit dem Trägerplattenteil 28 und dem Präzisionswellenanschlag 32 gegenüber der zwei Luftlagerbuchsen 30 als mechanischer Anschlag für eine obere und untere Position des Läufers 19. Die Präzisionswellen 29 sind bezüglich der Indenter-Längsachse 22 beabstandet zueinander und insbesondere diametral gegenüberliegend an der Trägerplatte 21 angeordnet. Die Präzisionswellen 29 sind jeweils parallel zueinander und insbesondere parallel zu der Indenter-Längsachse 22 orientiert. Die jeweils mit einer Präzisionswelle 29 zusammenwirkenden Luftlagerbuchsen 30 sind an dem Stativschlitten 17 befestigt.

Das Messsystem 1 weist eine Wegmesseinheit 33 auf. Die Wegmesseinheit 33 ist als Laserinterferometer ausgeführt und in den Figuren rein schematisch dargestellt. Das Laserinterferometer umfasst eine Laserstrahlquelle 34, insbesondere ein Lichtwellenleiterende, zur Aussendung einer Laserstrahlung 35. Von der Laserstrahlquelle 34 gelangt der Laserstrahl 35 in einen Kollimator 36 und von dort in einen Strahlteiler 37. Der Laserstrahl 35 wird am Strahlteiler 37 geteilt und nach unten zu einem ersten Messspiegel 38 gelenkt, dort reflektiert und zurück in den Strahlteiler 37 geführt, von diesem gerade durchgelassen und an einem zweiten Messspiegel 40 reflektiert und zurück in den Strahlteiler 37 geführt. Der Laserstrahl wird vom Strahlteiler 37 reflektiert und von dort in die Laserinterferometerauswerteeinheit 39 geführt. Der Strahlverlauf ab der Strahlteilung beschreibt den Messarm des Interferometers, der den Abstand zwischen dem ersten Messspiegel 38 und dem zweiten Messspiegel 40 insgesamt zweifach durchläuft. Ein anderer Teil des vom Kollimator 36 stammenden Laserstrahls 35 wird in dem Strahlteiler 37 gerade durchgelassen und von dort direkt in eine Laserinterferometerauswerteeinheit 39 geleitet. Dieser Strahlverlauf beschreibt den sogenannten Referenzarm des Interferometers. Da dieser Strahlverlauf keine separat durchlaufene Länge aufweist, ist die Referenzarmlänge gleich Null. Die Laserinterferometerauswerteeinheit 39 erfasst die Änderungen der optischen Längendifferenz von Mess- und Referenzarm, insbesondere für das Messsystem 1 die Änderung des Abstandes zwischen dem ersten Messspiegel 38 und dem zweiten Messspiegel 40. Der Laserstrahl 35 zwischen dem ersten Messspiegel 38 und dem zweiten Messspiegel 40 und insbesondere der Messarm des Interferometers ist fluchtend zur Indenter-Längsachse 22 ausgerichtet, womit Längenmessabweichungen erster Ordnung gemäß des Abbe-Prinzips vermieden werden.

Der erste Messspiegel 38 ist Bestandteil des Läufers 19 und ist insbesondere an der Oberseite des ersten Trägerplattenteils 27, befestigt. Die Position des ersten Messspiegels 38 ist durch die Positionierbarkeit der Trägerplatte 21 beweglich ausgeführt, insbesondere entlang der Höhenrichtung 18.

Die Position des zweiten Messspiegels 40 ist stationär ausgeführt und insbesondere an dem Metrologierahmen 12, insbesondere an der oberen Halteplatte 14, befestigt. Die beiden Messspiegel 38, 40 sind insbesondere fluchtend zueinander und insbesondere jeweils koaxial zum Strahlengang des Laserstrahls 35, der von dem Strahlteiler 37 ausgesendet wird, orientiert. Insbesondere sind die beiden Messspiegel 38, 40 jeweils koaxial zur Indenter-Längsachse 22 orientiert.

An dem Metrologierahmen 12, insbesondere an der Halteplatte 14, ist ein stationärer Referenzpositionssensor 41 angeordnet, der insbesondere eine nicht näher dargestellte Lichtquelle, insbesondere ein LED-Element, und eine Doppelfotodiode umfasst. Der stationäre Referenzpositionssensor 41 wirkt mit dem oberen Abschnitt und einem dort eingebrachten horizontalen Schlitz einer Schlitzblende 42 zusammen, um eine Referenzposition zur Initialisierung des inkrementell messenden Laserinterferometers zur totstreckenabhängigen Umweltkorrektur zu bestimmen. Die Schlitzblende 42 ist insbesondere am Läufer 19 und insbesondere an der Trägerplatte 21 befestigt. An dem Stativschlitten 17 ist ein in Höhenrichtung 18 beweglicher Referenzpositionssensor 43 angebracht. Der bewegliche Referenzpositionssensor 43 ist mit dem Stativschlitten 17 verfahrbar und ist insbesondere identisch zu dem stationären Referenzpositionssensor 41 ausgeführt. Der bewegliche Referenzpositionssensor 43 wirkt mit dem mittleren Abschnitt und einem dort eingebrachten weiteren horizontalen Schlitz der Schlitzblende 42 zusammen. Der bewegliche Referenzpositionssensor 43 dient der Erfassung einer Referenzposition für die Bewegung des Läufers 19 sowie dessen Regelung während der vertikalen Vorpositionierung des Stativschlittens 17 mit dem Indenter 20.

Das Messsystem 1 weist insbesondere zwei Deflektionsmesssysteme auf. Jedes Deflektionsmesssystem umfasst eine Laserdiode 44, deren ausgesandter Laserstrahl 50 durch den Indentionspunkt 9 verläuft. Die Laserstrahlen 50 der Deflektionsmesssysteme kreuzen sich im Indentionspunkt 9 und können so zur visuellen Bewertung der Vorpositionierung des Stativschlittens 17 und/oder zur Markierung der Indentionsstelle genutzt werden. Die Deflektionsmesssysteme umfassen ferner jeweils einen Positionssensor 45, insbesondere eine positionsempfindliche Fotodiode zur Erfassung des von der Laserdiode 44 abgegebenen und an der Oberfläche des Gegenstands 2 reflektierten Laserstrahls 50. Der Positionssensor 45 ist beispielsweise als Quadrantenfotodiode oder als Lateraleffektdiode ausgeführt. Mittels der Deflektionsmesssysteme kann eine Erfassung des Abstands des Stativschlittens 17 zum Gegenstand 2 sowie der Neigung des Gegenstands 2 erfolgen.

Insbesondere kann das Messsystem 1 dadurch mit einem nicht näher dargestellten Aktor zur vertikalen Vorpositionierung des Stativschlittens 17 eine automatische Anpassung an unterschiedliche Dicken des Gegenstands 2 vornehmen. Mittels der erfassten Neigung des Gegenstands 2 kann mit den Linearaktoren 11 die Neigung des Gegenstands 2 auf die Indenter-Längsachse 22 ausgerichtet werden.

Das Messsystem 1 weist eine Steuerungs-/Regelungseinheit 46 auf, die insbesondere mit sämtlichen Sensoren und/oder Aktoren des Messsystems 1 in, insbesondere bidirektionaler, Signalverbindung steht. Die Steuerungs-/Regelungseinheit 46 kann an einem beliebigen Ort im Messsystem integriert oder extern dazu angeordnet sein. Die Signalverbindung zwischen der Steuerungs-/Regelungseinheit 46 und den weiteren Komponenten kann kabelgebunden oder kabellos erfolgen. Mittels der Steuerungs-/Regelungseinheit 46 ist eine Positions- und Trajektorienregelung des Indenters 20 in Echtzeit möglich.

Der Metrologierahmen 12 und die Wegmesseinheit 33 definieren einen getrennten Wegmesskreis 47, der in Fig. 1 durch eine gepunktete Linie symbolisiert ist. Der gesamte Wegmesskreis 47 erstreckt sich vom Gegenlager 6 durch den Metrologierahmen 12, also durch die Basis 13, die Stütze 15, die Halteplatte 14 und über die Wegmesseinheit 33, also das

**EP 4 212 847 B1**

Laserinterferometer, die Trägerplatte 21 und den Indenter 20 zurück über den Gegenstand 2 zu dem Gegenlager 6.

Der Indenter 20, die Trägerplatte 21, der mindestens eine Aktor 23 für die Krafterzeugung und der mindestens eine Aktor 24 für die Bewegungserzeugung, der Stativschlitten 17, die Vertikalsäule 5, die Grundplatte 4, die primäre Auflage 7 der kinematischen Kelvin-Kopplung, das Gegenlager 6 zurück über den Gegenstand 2 zu dem Indenter 20 definieren einen Kraftmesskreis 48, der in Fig. 1 mit einer gestrichelten Linie dargestellt ist.

Der Kraftmesskreis 48 und der Wegmesskreis 47 sind großteils getrennt voneinander ausgeführt.

Nachfolgend wird anhand von Fig. 1 bis 3 ein Verfahren zur primären und instrumentierten Härtemessung des Gegenstands 2 näher erläutert. Zunächst wird das Messsystem 1 in einem Geschwindigkeitsmodus betrieben und der Läufer 19 mit einer definierten Geschwindigkeit $v_{VM}$ mit dem mindestens einen Bewegungserzeugungs-Aktor 23, 24 bewegt und dabei an dem mindestens einen Krafterzeugungs-Aktor 23, 24 die induzierte Spannung $U_{VM}$ gemessen. Nachfolgend wird das Messsystem 1 in einem Wägemodus betrieben und der für die Kompensation der Gewichts- oder Hangabtriebskraft im Wägemodus erforderliche Spulenstrom $I_{FM}$ bzw. die am Reihenwiderstand $R$ abfallende Spannung $U_{FM}$ gemessen. Es ist dadurch möglich, die Gewichtskraft $F_G$ des Läufers 19 gemäß Gleichung (4) oder bei gegenüber der vertikalen geneigten Anordnung die entsprechende Hangabtriebskraft $F_{H,FM}$ gemäß Gleichung (5) zu ermitteln.

In einem abschließenden Modus zur Härtemessung dringt der Indenter 20 mit einer gesteuerten/geregelten Linearbewegung des Läufers 19 in den Gegenstand 2 ein, wobei gleichzeitig eine Messung des Eindringweges $s_{M,HM}$ erfolgt, bis die gewählte maximale Messkraft $F_{M,HM}$ oder der maximale Eindringweg $s_{M,HM}$ erreicht wird.

Das Verfahren ermöglicht eine primäre, instrumentierte Härtemessung mit direkter Rückführung über die primäre Kraft- und Wegmessung.

## Patentansprüche

1.　Messsystem zur primären und instrumentierten Härtemessung eines Gegenstands (2), wobei das Messsystem (1) umfasst

　　a. ein Stativ (3) mit

　　　　i. einer Grundplatte (4) und einer daran befestigten Vertikalsäule (5),
　　　　ii. einem entlang der Vertikalsäule (5) verfahrbaren Stativschlitten (17),
　　　　iii. einem Gegenlager (6) zum Auflegen des Gegenstands (2),

　　b. einen am Stativschlitten (17) befestigten und relativ dazu geführt verlagerbaren Läufer (19) mit

　　　　i. einem Indenter (20) zum Eindringen in den Gegenstand (2),
　　　　ii. mindestens einem Krafterzeugungs-Aktor (23, 24),
　　　　iii. mindestens einem Bewegungserzeugungs-Aktor (23, 24), wobei der Indenter (20) über die Aktoren (23, 24) mit dem Stativschlitten (17) gekoppelt ist,
　　　　wobei der Indenter (20), der mindestens eine Krafterzeugungs-Aktor (23, 24), der Stativschlitten (17), die Grundplatte (4), die Vertikalsäule (5), das Gegenlager (6) und der Gegenstand (2) einen Kraftmesskreis (48) definieren,

　　c. eine Wegmesseinheit (33) zur Messung eines Weges des Stativschlittens (17) und/oder des Läufers (19) mit dem Indenter (20), wobei der Metrologierahmen (12), die Wegmesseinheit (33), der Läufer (19), der Indenter (20), der Gegenstand (2) und das Gegenlager (6) einen Wegmesskreis (47) definieren,
　　**dadurch gekennzeichnet, dass** das Messsystem (1) ferner umfasst einen Metrologierahmen (12), der auf der Grundplatte (4) aufliegt und sich seitlich an der Vertikalsäule (5) abstützt,
　　wobei der Kraftmesskreis (48) und der Wegmesskreis (47) getrennt voneinander ausgeführt sind.

2.　Messsystem gemäß Anspruch 1, **gekennzeichnet durch** vier Aktoren (23, 24), die insbesondere bezüglich einer Indenter-Längsachse (22) paarweise diametral gegenüberliegend angeordnet sind.

3.　Messsystem gemäß einem der vorstehenden Ansprüche, **dadurch gekennzeichnet, dass** die Aktoren (23, 24) an einer Trägerplatte (21) des Läufers (19) befestigt sind, an der insbesondere der Indenter (20) gehalten ist.

4.　Messsystem gemäß Anspruch 3, **dadurch gekennzeichnet, dass** die Trägerplatte (21) zweiteilig ausgeführt ist mit einem ersten, insbesondere zentral angeordneten, thermisch ausdehnungsarmen Trägerplattenteil (27), wobei an diesem insbesondere der Indenter (20) und ein erster Messspiegel (38) befestigt sind, und einem zweiten Träger-

**11**

plattenteil (28), das insbesondere das erste Trägerplattenteil (27) umgibt, wobei dieses insbesondere die Aktoren (23, 24) mit dem Indenter (20) verbindet.

5. Messsystem gemäß einem der vorstehenden Ansprüche, **dadurch gekennzeichnet, dass** das Stativ (3) und der Metrologierahmen (12) über eine kinematische Kelvin-Kopplung verbunden sind, wobei insbesondere mit einer Auflage (7) des Gegenlagers (6) die Position des Metrologierahmens (12) relativ zum Stativ (3) vorgegeben ist und sich der Metrologierahmen (12) insbesondere mittels zwei weiterer Auflagen (16) der kinematischen Kelvin-Kopplung an dem Stativ (3), insbesondere seitlich, abstützt.

6. Messsystem gemäß einem der vorstehenden Ansprüche, **dadurch gekennzeichnet, dass** die Wegmesseinheit (33) als Laserinterferometer ausgeführt ist und insbesondere eine Laserstrahlquelle (34), einen Kollimator (36), einen Strahlteiler (37), einen ersten Messspiegel (38), einen zweiten Messspiegel (40) und eine Laserinterferometerauswerteeinheit (39) aufweist.

7. Messsystem gemäß einem der vorstehenden Ansprüche, **gekennzeichnet durch** mindestens ein Luftlager (29, 30) zur geführten reibungsfreien Lagerung des Indenters (20) relativ zum Stativschlitten (17).

8. Messsystem gemäß einem der vorstehenden Ansprüche, **dadurch gekennzeichnet, dass** die Aktoren (23, 24) jeweils eine, insbesondere am Stativschlitten (17) befestigte, Magnetanordnung (25) und eine dazu bewegliche Spule (26) aufweisen.

9. Messsystem gemäß einem der vorstehenden Ansprüche, **gekennzeichnet durch** mindestens ein Deflektionsmesssystem (44, 45) zur Abstandserfassung des Stativschlittens (17) zum Gegenstand (2) und/oder zur Neigungserfassung des Gegenstands (2), wobei das mindestens eine Deflektionsmesssystem eine Laserdiode (44) und einen Positionssensor (45) umfasst.

10. Messsystem gemäß einem der vorstehenden Ansprüche, **gekennzeichnet durch** mindestens einen Stellaktor (10, 11) zur horizontalen Positionierung und/oder Neigungsausrichtung des Gegenstands (2) am Gegenlager (6).

11. Messsystem gemäß einem der vorstehenden Ansprüche, **gekennzeichnet durch** eine Steuerungs-/Regelungseinheit (46), die dazu ausgeführt ist, das Messsystem (1) in verschiedenen Betriebsmodi zu betreiben, insbesondere in einem Wägemodus, in einem Geschwindigkeitsmodus und/oder in einem Modus zur Härtemessung, insbesondere mit geregelter Trajektorie und Prüfkraft.

12. Verfahren zur primären und instrumentierten Härtemessung eines Gegenstands (2) unter Verwendung eines Messsystems (1) gemäß einem der vorstehenden Ansprüche mit einer Steuerungs-/Regelungseinheit (46), die dazu ausgeführt ist, dass Messsystem (1) in einem Wägemodus, einem Geschwindigkeitsmodus und/oder einem Modus zur Härtemessung zu betreiben, umfassend die Verfahrensschritte

- in dem Geschwindigkeitsmodus Messen einer induzierten Spannung $U_{VM}$ des mit einer definierten Geschwindigkeit $v_{VM}$ bewegten, mindestens einen Krafterzeugungs-Aktors (23, 24),
- in dem Wägemodus Messen eines Spulenstroms $I_{FM}$, der für eine in einem der Aktoren (23, 24) erzeugte Lorentzkraft $F_{L,FM}$ erforderlich ist, um einen von einem Neigungswinkel abhängigen Gewichtskraftanteil des Läufers (19) zu kompensieren, wobei die Aktoren (23, 24) jeweils eine Magnetanordnung (25) und eine dazu bewegliche Spule (26) aufweisen,
- in dem Modus zur Härtemessung Eindringen des Indenters (20) in den Gegenstand (2) mit einer Linearbewegung des Läufers (19), bis die gewählte maximale Messkraft $F_{M,HM}$ gemäß $F_{M,HM} = U_{VM} / v_{VM} \cdot (I_{FM} - I_{M,HM})$ oder maximale Eindringweg $s_{M,HM}$ erreicht ist und somit eine primäre Prüfkraftmessung nach dem Kibble-Waagenprinzip erfolgt.

13. Verfahren gemäß Anspruch 12, **dadurch gekennzeichnet, dass** während des Geschwindigkeitsmodus eine Messung des Kalibrierweges $s_{VM}$ und/oder während des Eindringen des Indenters (20) eine Messung des Eindringweges $s_{M,HM}$ erfolgt und wobei die Geschwindigkeiten $v_{VM}$ bzw. $v_{M,HM}$ aus einem mittels der Wegmesseinheit (33) ermittelten Weg $s_{VM}$ bzw. $s_{M,HM}$ und einem rückgeführten Zeitnormal t gemäß $v_{VM} = ds_{VM} / dt$ bzw. $v_{M,HM} = ds_{M,HM} / dt$ ermittelt wird, wobei insbesondere eine primäre Wegmessung mit einem Interferometer und/oder eine Rückführung der Wegmessung über eine primäre Wegmessung erfolgt.

14. Verfahren gemäß Anspruch 12 oder 13, **gekennzeichnet durch** automatisches Umschalten zwischen dem Wägemodus, dem Geschwindigkeitsmodus und dem Modus zur Härtemessung.

15. Verfahren gemäß einem der Ansprüche 12 bis 14, **gekennzeichnet durch** eine automatische Vorpositionierung des Stativschlittens (17) und/oder parallele Ausrichtung der Oberflächennormalen des Gegenstands (2) am Indentionspunkt (9) auf die Indenter-Längsachse (22) durch das mindestens eine Deflektionsmesssytem (44, 45) und/oder dem mindestens einen Stellaktor (11) in Verbindung mit dem Gegenlager (6).

**Claims**

1. A measuring system for primary and instrumented hardness measurement of an object (2), wherein the measuring system (1) comprises

    a. a stand (3) having

        i. a base plate (4) and a vertical column (5) fastened thereto,
        ii. a stand carriage (17) that is movable along the vertical column (5),
        iii. a counter bearing (6) for placing the object (2),

    b. a runner (19) that is fastened to the stand carriage (17) and displaceable relative thereto in a guided manner, said runner (19) having

        i. an indenter (20) to penetrate the object (2),
        ii. at least one force generation actuator (23, 24),
        iii. at least one motion generation actuator (23, 24),

            wherein the indenter (20) is coupled to the stand carriage (17) via the actuators (23, 24),
            wherein the indenter (20), the at least one force generation actuator (23, 24), the stand carriage (17), the base plate (4), the vertical column (5), the counter bearing (6) and the object (2) define a force measuring circuit (48),

    c. a displacement measuring unit (33) for measuring a displacement of the stand carriage (17) and/or of the runner (19) with the indenter (20), wherein the metrology frame (12), the displacement measuring unit (33), the runner (19), the indenter (20), the object (2) and the counter bearing (6) define a displacement measuring circuit (47), **characterized in that** the measuring system (1) further comprises a metrology frame (12) which rests on the base plate (4) and is supported laterally on the vertical column (5), wherein the force measuring circuit (48) and the displacement measuring circuit (47) are configured separately from one another.

2. A measuring system according to claim 1, **characterized by** four actuators (23, 24) which are arranged diametrically opposite each other in pairs, in particular with respect to an indenter longitudinal axis (22).

3. A measuring system according to any one of the preceding claims, **characterized in that** the actuators (23, 24) are fastened to a carrier plate (21) of the runner (19), on said carrier plate (21) in particular the indenter (20) is held.

4. A measuring system according to claim 3, **characterized in that** the carrier plate (21) is designed in two parts with a first, in particular centrally arranged, thermally low-expansion carrier plate part (27), to which in particular the indenter (20) and a first measuring mirror (38) are fastened, and a second carrier plate part (28) which in particular surrounds the first carrier plate part (27), wherein the latter in particular connects the actuators (23, 24) to the indenter (20).

5. A measuring system according to any one of the preceding claims, **characterized in that** the stand (3) and the metrology frame (12) are connected via a kinematic Kelvin coupling, wherein the position of the metrology frame (12) relative to the stand (3) is predetermined in particular by means of an abutment (7) of the counter bearing (6) and the metrology frame (12) is supported on the stand (3), in particular laterally, in particular by means of two further abutments (16) of the kinematic Kelvin coupling.

6. A measuring system according to any one of the preceding claims, **characterized in that** the displacement measuring unit (33) is designed as a laser interferometer and in particular has a laser beam source (34), a collimator (36), a beam splitter (37), a first measuring mirror (38), a second measuring mirror (40) and a laser interferometer evaluation unit (39).

7. A measuring system according to any one of the preceding claims, **characterized by** at least one air bearing (29, 30) for guided frictionless mounting of the indenter (20) relative to the stand carriage (17).

8. A measuring system according to any one of the preceding claims, **characterized in that** the actuators (23, 24) each have a magnet arrangement (25) fastened in particular to the stand carriage (17) and a coil (26) that is movable with respect thereto.

9. A measuring system according to any one of the preceding claims, **characterized by** at least one deflection measuring system (44, 45) for detecting the distance of the stand carriage (17) to the object (2) and/or for detecting the inclination of the object (2), wherein the at least one deflection measuring system comprises a laser diode (44) and a position sensor (45).

10. A measuring system according to any one of the preceding claims, **characterized by** at least one positioning actuator (10, 11) for horizontal positioning and/or inclination alignment of the object (2) on the counter bearing (6).

11. A measuring system according to any one of the preceding claims, **characterized by** a control/regulation unit (46) which is designed to operate the measuring system (1) in various operating modes, in particular in a weighing mode, in a velocity mode and/or in a hardness measurement mode, in particular with controlled trajectory and test force.

12. A method for primary and instrumented hardness measurement of an object (2) using a measuring system (1) according to any one of the preceding claims with a control/regulation unit (46) which is designed to operate the measuring system (1) in a weighing mode, a velocity mode and/or in a hardness measurement mode, comprising the steps of

 - in the velocity mode, measuring an induced voltage $U_{VM}$ of the at least one force generation actuator (23, 24) moved at a defined velocity $v_{VM}$,
 - in the weighing mode, measuring a coil current $I_{FM}$ that is required for a Lorentz force $F_{L,FM}$ generated in one of the actuators (23, 24) to compensate for a weight force portion of the runner (19) depending on an angle of inclination, wherein the actuators (23, 24) each comprise a magnet arrangement (25) and a coil (26) movable relative thereto,
 - in the hardness measurement mode, penetration of the indenter (20) into the object (2) with a linear movement of the runner (19) until the selected maximum measuring force $F_{M,HM}$ according to $F_{M,HM} = U_{VM} / v_{VM} \cdot (I_{FM} - I_{M,HM})$ or maximum penetration distance $s_{M,HM}$ is reached and thus a primary test force measurement according to the Kibble balance principle takes place.

13. A method according to claim 12, **characterized in that** during the velocity mode, a measurement of the calibration distance $s_{VM}$ and/or during the penetration of the indenter (20), a measurement of the penetration distance $s_{M,HM}$ takes place and wherein the velocities $v_{VM}$ or $v_{M,HM}$ are determined from a distance $s_{VM}$ or $s_{M,HM}$ determined by means of the displacement measuring unit (33) and a traced back time standard $t$ according to $v_{VM} = ds_{VM} / dt$ or $v_{M,HM} = ds_{M,HM} / dt$, wherein in particular a primary displacement measurement is carried out with an interferometer and/or a traceability of the displacement measurement is carried out via a primary displacement measurement.

14. A method according to claim 12 or 13, **characterized by** automatic switching between the weighing mode, the velocity mode and the hardness measurement mode.

15. A method according to any one of claims 12 to 14, **characterized by** an automatic pre-positioning of the stand carriage (17) and/or parallel alignment of the surface normals of the object (2) at the indentation point (9) to the indenter longitudinal axis (22) by the at least one deflection measuring system (44, 45) and/or the at least one positioning actuator (11) in connection with the counter bearing (6).

**Revendications**

1. Système de mesure pour la mesure de dureté primaire et instrumentée d'un objet (2), dans lequel le système de mesure (1) comprend :

a. un trépied (3) ayant

    i. une plaque de base (4) et une colonne verticale (5) fixée sur celle-ci,
    ii. un chariot de trépied (17) déplaçable le long de la colonne verticale (5),
    iii. un contre-appui (6) pour placer l'objet (2),

b. un coulisseau (19) fixé sur le chariot de trépied (17) et déplaçable de façon guidée par rapport à celui-ci, ayant

    i. un pénétrateur (20) pour pénétrer dans l'objet (2),
    ii. au moins un actionneur de génération de force (23, 24),
    iii. au moins un actionneur de génération de mouvement (23, 24),

    dans lequel le pénétrateur (20) est couplé au chariot de trépied (17) par l'intermédiaire des actionneurs (23, 24),
    dans lequel le pénétrateur (20), ledit au moins un actionneur de génération de force (23, 24), le chariot de trépied (17), la plaque de base (4), la colonne verticale (5), le contre-appui (6) et l'objet (2) définissent un circuit de mesure de force (48),

c. une unité de mesure de déplacement (33) pour mesurer un déplacement du chariot de trépied (17) et/ou du coulisseau (19) avec le pénétrateur (20),

    dans lequel le bâti de métrologie (12), l'unité de mesure de déplacement (33), le coulisseau (19), le pénétrateur (20), l'objet (2) et le contre-appui (6) définissent un circuit de mesure de déplacement (47), **caractérisé en ce que** le système de mesure (1) comprend en outre un bâti de métrologie (12) qui est placé sur la plaque de base (4) et est latéralement en appui contre la colonne verticale (5), dans lequel le circuit de mesure de force (48) et le circuit de mesure de déplacement (47) sont configurés séparément l'un de l'autre.

2. Système de mesure selon la revendication 1, **caractérisé par** quatre actionneurs (23, 24) qui sont agencés par paire de manière diamétralement opposée, en particulier par rapport à un axe longitudinal de pénétrateur (22).

3. Système de mesure selon l'une des revendications précédentes, **caractérisé en ce que** les actionneurs (23, 24) sont fixés sur une plaque de support (21) du coulisseau (19), sur laquelle le pénétrateur (20) est en particulier maintenu.

4. Système de mesure selon la revendication 3, **caractérisé en ce que** la plaque de support (21) est conçue en deux parties avec une première partie de plaque de support (27) à faible dilatation thermique, en particulier agencée au centre, dans lequel le pénétrateur (20) et un premier miroir de mesure (38) sont en particulier fixés sur celle-ci, et une seconde partie de plaque de support (28) qui entoure en particulier la première partie de plaque de support (27), dans lequel cette dernière relie en particulier les actionneurs (23, 24) au pénétrateur (20).

5. Système de mesure selon l'une des revendications précédentes, **caractérisé en ce que** le trépied (3) et le bâti de métrologie (12) sont reliés par un couplage cinématique de Kelvin, dans lequel la position du bâti de métrologie (12) par rapport au trépied (3) est prédéfinie en particulier avec un appui (7) du contre-appui (6), et le bâti de métrologie (12) est en particulier en appui contre le trépied (3), en particulier latéralement, au moyen de deux appuis supplémentaires (16) du couplage cinématique de Kelvin.

6. Système de mesure selon l'une des revendications précédentes, **caractérisé en ce que** l'unité de mesure de déplacement (33) est conçue comme un interféromètre laser et comporte en particulier une source de faisceau laser (34), un collimateur (36), un séparateur de faisceau (37), un premier miroir de mesure (38), un second miroir de mesure (40) et une unité d'évaluation à interféromètre laser (39).

7. Système de mesure selon l'une des revendications précédentes, **caractérisé par** au moins un palier à air (29, 30) pour monter le pénétrateur (20) de manière guidée sans frottement par rapport au chariot de trépied (17).

8. Système de mesure selon l'une des revendications précédentes, **caractérisé en ce que** les actionneurs (23, 24) comportent respectivement un ensemble à aimant (25) en particulier fixé sur le chariot de trépied (17), et une bobine mobile (26) par rapport à celui-ci.

9. Système de mesure selon l'une des revendications précédentes, **caractérisé par** au moins un système de mesure de déflexion (44, 45) pour détecter la distance du chariot de trépied (17) jusqu'à l'objet (2) et/ou pour détecter l'inclinaison de l'objet (2), dans lequel ledit au moins un système de mesure de déflexion comprend une diode laser (44) et un capteur de position (45).

10. Système de mesure selon l'une des revendications précédentes, **caractérisé par** au moins un servo-actionneur (10, 11) pour le positionnement horizontal et/ou l'alignement d'inclinaison de l'objet (2) sur le contre-appui (6).

11. Système de mesure selon l'une des revendications précédentes, **caractérisé par** une unité de commande/régulation (46) qui est configurée pour faire fonctionner le système de mesure (1) dans différents modes de fonctionnement, en particulier dans un mode de pesée, dans un mode de vitesse et/ou dans un mode de mesure de dureté, en particulier avec une trajectoire et une force d'essai contrôlées.

12. Procédé de mesure de dureté primaire et instrumentée d'un objet (2) en utilisant un système de mesure (1) selon l'une des revendications précédentes, comportant une unité de commande/régulation (46) qui est configurée pour faire fonctionner le système de mesure (1) dans un mode de pesée, un mode de vitesse et/ou un mode de mesure de dureté, comprenant les étapes de procédé consistant à :

- dans le mode de vitesse, mesurer une tension induite $U_{VM}$ dudit au moins un actionneur de génération de force (23, 24) mis en mouvement à une vitesse définie,
- dans le mode de pesée, mesurer un courant de bobine $I_{FM}$ qui est nécessaire pour générer une force de Lorentz $F_{L,FM}$ dans l'un des actionneurs (23, 24) afin de compenser une partie de force de pesanteur du coulisseau (19) dépendant d'un angle d'inclinaison, dans lequel les actionneurs (23, 24) comportent respectivement un ensemble à aimant (25) et une bobine (26) mobile par rapport à celui-ci,
- dans le mode de mesure de dureté, faire pénétrer le pénétrateur (20) dans l'objet (2) avec un mouvement linéaire du coulisseau (19), jusqu'à ce que la force de mesure maximale $F_{M,HM}$ sélectionnée d'après $F_{M,HM} = U_{VM} / v_{VM} \cdot (I_{FM} - I_{M,HM})$ ou que le déplacement de pénétration maximale $s_{M,HM}$ soit atteint et qu'une mesure primaire de la force d'essai soit ainsi effectuée selon le principe de la balance de Kibble.

13. Procédé selon la revendication 12, **caractérisé en ce que** pendant le mode de vitesse, une mesure du déplacement d'étalonnage $s_{VM}$ et/ou pendant la pénétration du pénétrateur (20), une mesure du déplacement de pénétration $s_{M,HM}$ est effectuée et dans lequel les vitesses $v_{VM}$ ou $v_{M,HM}$ sont déterminées au moyen de l'unité de mesure de déplacement (33) à partir d'un déplacement $s_{VM}$ ou $S_{M,HM}$, et un étalon de temps de traçage $t$ est déterminé d'après $v_{VM} = ds_{VM} / dt$ ou $v_{M,HM} = ds_{M,HM} / dt$, dans lequel une mesure de déplacement primaire est en particulier effectuée avec un interféromètre et/ou une traçabilité de la mesure de déplacement est obtenue par l'intermédiaire d'une mesure de déplacement primaire.

14. Procédé selon la revendication 12 ou 13, **caractérisé par** une commutation automatique entre le mode de pesée, le mode de vitesse et le mode de mesure de dureté.

15. Procédé selon l'une des revendications 12 à 14, **caractérisé par** un pré-positionnement automatique du chariot de trépied (17) et/ou un alignement parallèle des normales de surface de l'objet (2) au point de pénétration (9) sur l'axe longitudinal de pénétrateur (22) par l'intermédiaire d'au moins un système de mesure de déflexion (44, 45) et/ou d'au moins un servo-actionneur (11) en association avec le contre-appui (6).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3899437 B
- DE 19904448 A1
- EP 3591352 A1
- DE 102015104696 B3
- DE 102016010668 B3
- DE 102015008326 B4

**In der Beschreibung aufgeführte Nicht-Patentliteratur**

- **CUTTINO, J. F. et al.** Three-dimensional metrology frame for precision applications. *Precision Engineering*, 1999, vol. 23, 103-112
- **MANSKE, E. et al.** Recent developments and challenges of nanopositioning and nanomeasuring technology. *Measurement Science and Technology*, 2012, vol. 23 (7), 1-10